# EUROPEAN PATENT APPLICATION

(11) **EP 3 007 263 A1**
(43) Date of publication of application: **13.04.2016**
(21) Application number: 14808351.2
(22) Date of filing: 30.05.2014
(51) Int. Cl.: H01M 10/0567, H01M 4/13, H01M 10/052

(54) **NON-AQUEOUS ELECTROLYTE SECONDARY BATTERY AND PRODUCTION METHOD FOR NON-AQUEOUS ELECTROLYTE SECONDARY BATTERY**

(30) Priority: 06.06.2013 JP 2013120268
(71) Applicant: GS Yuasa International Ltd., Kisshoin, Minami-ku, Kyoto-shi, Kyoto 601-8520 (JP)
(72) Inventor: KAWASOE, Yudai, Kyoto-shi Kyoto 601-8520 (JP); NISHIE, Katsushi, Kyoto-shi Kyoto 601-8520 (JP); HACHIDA, Takeshi, Kyoto-shi Kyoto 601-8520 (JP)
(74) Representative: Isarpatent
(86) International application number: PCT/JP2014/002891
(87) International publication number: WO 2014/196177

(57) **Abstract**

A non-aqueous electrolyte secondary battery comprises a positive electrode, a negative electrode, a separator and a non-aqueous electrolyte and an insulating layer is formed between the positive electrode and the negative electrode, wherein the non-aqueous electrolyte contains a cyclic sulfate compound having a specific structure or a cyclic disulfonate compound having a specific structure.

## Description

### TECHNICAL FIELD

The present invention relates to a non-aqueous electrolyte secondary battery and a method for producing a non-aqueous electrolyte secondary battery.

### BACKGROUND ART

Non-aqueous electrolyte secondary batteries such as lithium ion secondary batteries have higher energy density than other secondary batteries such as lead-acid batteries and alkaline secondary batteries. Accordingly, non-aqueous electrolyte secondary batteries are widely used as power supplies of portable equipment such as mobile phones. In recent years, active research and development for using the non-aqueous electrolyte secondary battery (hereinafter, also referred to as "battery") as power supplies of mobile objects such as an electric vehicle is carried out.

Heretofore, formation of the insulating layer between the positive electrode and the negative electrode has been investigated in order to improve the safety of a battery by preventing a short circuit between the positive electrode and the negative electrode, and addition of various compounds to the non-aqueous electrolyte has been investigated in order to improve battery characteristics. Patent Document 1 describes that storage characteristics of a battery are improved and initial rate characteristics are maintained over a long period of time by forming a porous insulating layer between the positive electrode and the negative electrode and including unsaturated sultone in the non-aqueous electrolyte.

### PRIOR ART DOCUMENT

### PATENT DOCUMENT

Patent Document 1: JP-A-2009-135076

### SUMMARY OF THE INVENTION

### PROBLEMS TO BE SOLVED BY THE INVENTION

However, the present inventors found that in a battery according to the invention of Patent Document 1, metallic lithium can be precipitated on the surface of the negative electrode in charging a battery in a low temperature environment. In recent years, lithium ion batteries (non-aqueous electrolyte secondary batteries) have increasing demand in use application in which charge is performed in low-temperature environment like power supplies for mobile objects such as hybrid cars. Therefore, it is very important to suppress the precipitation of metallic lithium on the surface of the negative electrode when charging a battery in a low temperature.

### MEANS FOR SOLVING THE PROBLEMS

In order to solve the above-mentioned problems, the present inventors made earnest investigations concerning various additives to the non-aqueous electrolyte, and consequently they found that in a battery having a porous insulating layer between the positive electrode and the negative electrode, when the non-aqueous electrolyte contains a cyclic sulfate compound having a specific structure or a cyclic disulfonate compound having a specific structure, the battery can suppress the precipitation of metallic lithium on the surface of the negative electrode in charging a battery in a low temperature environment.

A first aspect of the present application is a non-aqueous electrolyte secondary battery including a positive electrode, a negative electrode and a non-aqueous electrolyte and an insulating layer disposed between the positive electrode and the negative electrode, wherein the non-aqueous electrolyte contains a cyclic sulfate compound represented by the following general formula (1) or a cyclic disulfonate compound represented by the following general formula (4): 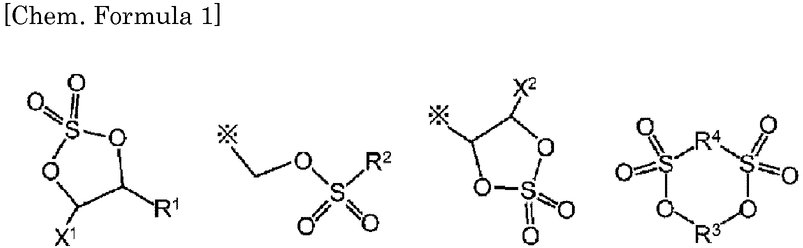 general formula (1) general formula (2) general formula (3) general formula (4) in which R¹ in the general formula (1) represents an alkyl group having 1 to 3 carbon atoms which is optionally substituted with a halogen element, or a group represented by the general formula (2) or the general formula (3); R² in the general formula (2) represents an alkyl group having 1 to 3 carbon atoms which is optionally substituted with a halogen element; portions of a symbol * in the general formula (2) and the general formula (3) represent a coupling position; X¹ and X² in the general formula (1) and the general formula (3) independently represent a hydrogen atom or a halogen element; and R³ and R⁴ in the general formula (4) independently represent a hydrocarbon group having 1 to 6 carbon atoms which optionally has a substituent and is optionally branched.

According to the above-mentioned first aspect, the battery in which the insulating layer is formed between the positive electrode and the negative electrode, and the non-aqueous electrolyte contains the cyclic sulfate compound represented by the general formula (1) or the cyclic disulfonate compound represented by the general formula (4), can suppress precipitation of metallic lithium on the surface of the negative electrode in charging a battery in a low temperature environment.

In a battery according to a second aspect of the present application, a separator is arranged between the positive electrode and the negative electrode in the battery according to the first aspect.

In a battery according to a third aspect of the present application, the cyclic sulfate compound represented by the general formula (1) in the battery according to the first aspect or the second aspect, is a compound represented by the following formula (5), a compound represented by the following formula (6) or a compound represented by the following formula (7), and the cyclic disulfonate compound represented by the general formula (4) is a compound represented by the following formula (8), a compound represented by the following formula (9) or a compound represented by the following formula (10):

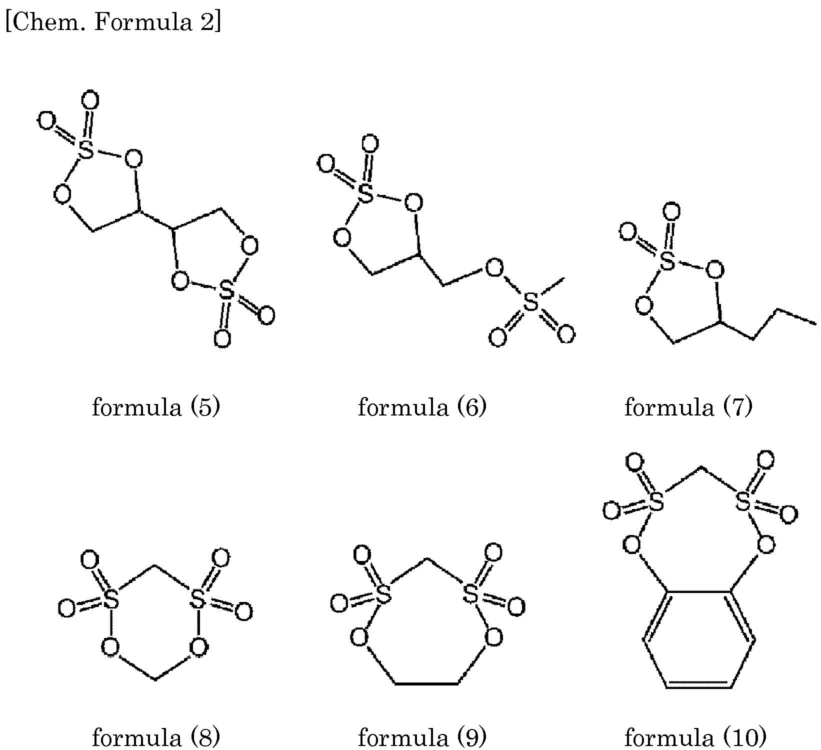

According to the above-mentioned third aspect, the battery which contains a compound represented by any one of the formula (5), the formula (6) and the formula (7) among the cyclic sulfate compounds represented by the general formula (1) or a compound represented by any one of the formula (8), the formula (9) and the formula (10) among the cyclic disulfonate compounds represented by the general formula (4), is preferred since the battery can more suppress the precipitation of metallic lithium on the surface of the negative electrode in charging a battery in a low temperature environment compared with a battery containing another cyclic sulfate compound or cyclic disulfonate compound.

In a battery according to a fourth aspect of the present application, the cyclic sulfate compound represented by the general formula (1) in the battery according to any one of the first aspect to the third aspect is a compound represented by the general formula (5) or a compound represented by the general formula (6).

In a battery according to a fifth aspect of the present application, the content of the cyclic sulfate compound represented by the general formula (1) or the cyclic disulfonate compound represented by the general formula (4) in the battery according to any one of the first aspect to the fourth aspect, is 4.0% by mass or less with respect to the total mass of the non-aqueous electrolyte.

According to the above-mentioned fifth aspect, in the battery according to any one of the first aspect to the fourth aspect, the precipitation of metallic lithium on the surface of the negative electrode can be more suppressed in charging a battery in a low temperature environment by setting the content of the cyclic sulfate compound represented by the general formula (1) or the cyclic disulfonate compound represented by the general formula (4) to 4.0% by mass or less with respect to the total mass of the non-aqueous electrolyte.

In a battery according to a sixth aspect of the present application, the content of the cyclic sulfate compound represented by the general formula (1) or the cyclic disulfonate compound represented by the general formula (4) in the battery according to any one of the first aspect to the fifth aspect, is 3.0% by mass or less with respect to the total mass of the non-aqueous electrolyte.

In a battery according to a seventh aspect of the present application, the content of the cyclic sulfate compound represented by the general formula (1) or the cyclic disulfonate compound represented by the general formula (4) in the battery according to any one of the first aspect to the sixth aspect, is 2.0% by mass or less with respect to the total mass of the non-aqueous electrolyte.

In a battery according to an eighth aspect of the present application, the content of the cyclic sulfate compound represented by the general formula (1) or the cyclic disulfonate compound represented by the general formula (4) in the battery according to any one of the first aspect to the seventh aspect, is 0.01% by mass or more with respect to the total mass of the non-aqueous electrolyte.

In a battery according to a ninth aspect of the present application, the non-aqueous electrolyte in the battery according to any one of the first aspect to the eighth aspect contains lithium difluorophosphate.

According to the above-mentioned ninth aspect, the battery in which the non-aqueous electrolyte in the battery according to any one of the first aspect to the eighth aspect contains lithium difluorophosphate, can more suppress the precipitation of metallic lithium on the surface of the negative electrode in charging a battery in a low temperature environment compared with the battery according to any one of the first aspect to the eighth aspect.

In a battery according to a tenth aspect of the present application, the content of the lithium difluorophosphate in the battery according to any one of the first aspect to the ninth aspect, is 2.0% by mass or less with respect to the total mass of the non-aqueous electrolyte.

In a battery according to an eleventh aspect of the present application, the content of the lithium difluorophosphate in the battery according to any one of the first aspect to the tenth aspect, is 1.5% by mass or less with respect to the total mass of the non-aqueous electrolyte.

In a battery according to a twelfth aspect of the present application, the content of the lithium difluorophosphate in the battery according to any one of the first aspect to the eleventh aspect, is 1.0% by mass or less with respect to the total mass of the non-aqueous electrolyte.

In a battery according to a thirteenth aspect of the present application, the content of the lithium difluorophosphate in the battery according to any one of the first aspect to the twelfth aspect, is 0.05% by mass or more with respect to the total mass of the non-aqueous electrolyte.

In a battery according to a fourteenth aspect of the present application, the insulating layer in the battery according to any one of the first aspect to the thirteenth aspect is a porous layer containing an inorganic oxide.

In a battery according to a fifteenth aspect of the present application, the insulating layer in the battery according to any one of the first aspect to the fourteenth aspect is formed on the surface of the negative electrode, or is formed in contact with the surface of the negative electrode.

In a battery according to a sixteenth aspect of the present application, the thickness of the insulating layer in the battery according to any one of the first aspect to the fifteenth aspect is 20 µm or less in a thickness direction of the separator.

Further, a seventeenth aspect of the present application is a method for producing a non-aqueous electrolyte secondary battery which includes a positive electrode, a negative electrode, a separator and a non-aqueous electrolyte and an insulating layer formed between the positive electrode and the negative electrode, wherein as the non-aqueous electrolyte, a non-aqueous electrolyte containing a cyclic sulfate compound represented by the general formula (1) or a cyclic disulfonate compound represented by the general formula (4) in an amount of 4.0% by mass or less with respect to the total mass of the non-aqueous electrolyte is used.

### ADVANTAGES OF THE INVENTION

The non-aqueous electrolyte secondary battery according to the invention of this application exhibits the effect of suppressing the precipitation of metallic lithium on the surface of the negative electrode in charging a battery in a low temperature environment.

### BRIEF DESCRIPTION OF THE DRAWINGS

Fig. 1 shows a sectional view of a non-aqueous electrolyte secondary battery of a first embodiment.
Fig. 2 shows a sectional view of a negative electrode plate of the non-aqueous electrolyte secondary battery of the first embodiment.
Fig. 3 is a schematic view showing an energy storage apparatus including a plurality of the non-aqueous electrolyte secondary batteries of the first embodiment.
Fig. 4 is a schematic view showing an automobile having an energy storage apparatus mounted thereon.

### MODE FOR CARRYING OUT THE INVENTION

Hereinafter, embodiments of the present invention will be described in detail; however the following descriptions are just examples of embodiments of the present invention and the present invention is not limited to these exemplifications without departing from the gist of the invention.

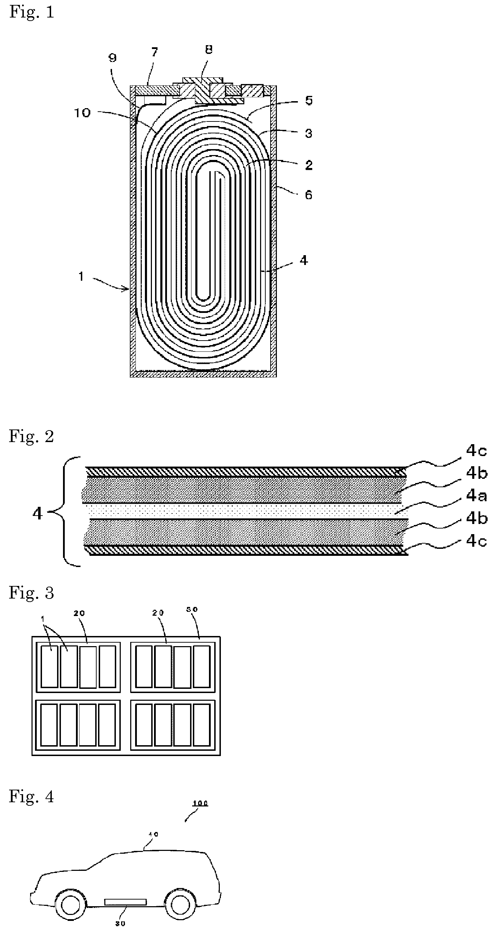

A first embodiment of the present invention will be described with reference to Fig. 1 and Fig. 2. A non-aqueous electrolyte secondary battery (hereinafter, also referred to as "battery") shown in Fig. 1 includes a power generating element in which a positive electrode plate and a negative electrode plate shown in Fig. 2 are wound with a separator interposed therebetween, the positive electrode plate being formed by applying a positive composite containing a positive active material onto both surfaces of a positive current collector made of aluminum foil or aluminum-alloy foil, the negative electrode plate being formed by applying a negative composite containing a negative active material onto both surfaces of a negative current collector made of copper foil and further forming an insulating layer on the surface of the resulting negative composite layer. The power generating element is housed in a battery case. A method of forming the insulating layer will be described later, and is not particularly limited. A location of the insulating layer formation may be a surface portion of the separator opposite to the composite layer on the electrode plate.

The positive electrode plate is connected to a battery lid via a positive lead. The negative electrode plate is connected to a negative terminal provided for the battery lid. The battery lid is attached by laser welding so as to close an opening of the battery case. The battery case is provided with a hole. The non-aqueous electrolyte is injected into the battery case through the hole, and a battery is completed by sealing the hole after injecting the non-aqueous electrolyte.

The insulating layer formed between the positive electrode and the negative electrode is not identical to the separator and does not correspond to the separator. That is, in the battery of the present invention, the separator is formed between the positive electrode and the negative electrode, and further the insulating layer is formed.

The safety of a battery is improved by disposing the separator between the positive electrode and the negative electrode, and further forming the insulating layer. For example, there is a fear that thermal shrinkage of a separator due to a temperature increase in a battery generates a location where the separator is not present between the positive electrode and the negative electrode, and thereby the battery is short-circuited. However, when the insulating layer exists in addition to the separator, the battery can prevent the short circuit by contact between the positive electrode and the negative electrode.

The separator in the present embodiment serves to electrically isolate the positive electrode plate from the negative electrode plate, and its shape and material are not particularly limited. As the separator, it is preferred to use a porous film, a nonwoven fabric and the like singly or in combination. Examples of materials constituting the separator include polyolefin resins typified by polyethylene and polypropylene; polyester resins typified by polyethylene terephthalate and polybutylene terephthalate; and polyvinylidene fluoride, vinylidene fluoride-hexafluoropropylene copolymer, vinylidene fluoride-perfluorovinyl ether copolymer, vinylidene fluoride-tetrafluoroethylene copolymer, vinylidene fluoride-hexafluoroacetone copolymer, vinylidene fluoride-ethylene copolymer, vinylidene fluoride-propylene copolymer, vinylidene fluoride-trifluoropropylene copolymer, vinylidene fluoride-tetrafluoroethylene-hexafluoropropylene copolymer, and vinylidene fluoride-ethylene-tetrafluoroethylene copolymer.

A non-aqueous electrolyte of the present invention contains a cyclic sulfate compound represented by the general formula (1) or the cyclic disulfonate compound represented by the general formula (4): 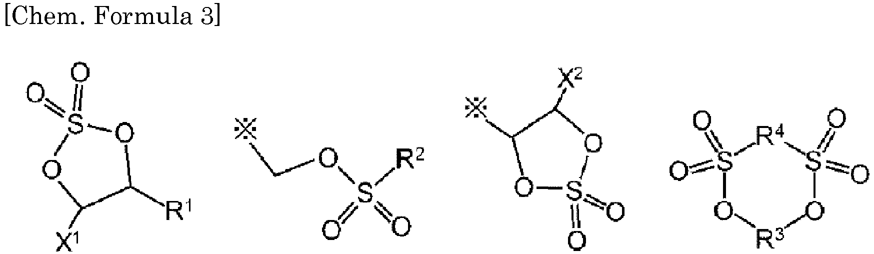 general formula (1) general formula (2) general formula (3) general formula (4) in which R¹ in the general formula (1) represents an alkyl group having 1 to 3 carbon atoms which is optionally substituted with a halogen element, or a group represented by the general formula (2) or the general formula (3); R² in the general formula (2) represents an alkyl group having 1 to 3 carbon atoms which is optionally substituted with a halogen element; portions of a symbol * in the general formula (2) and the general formula (3) represent a coupling position; X¹ and X² in the general formula (1) and the general formula (3) independently represent a hydrogen atom or a halogen element; and R³ and R⁴ in the general formula (4) independently represent a hydrocarbon group having 1 to 6 carbon atoms which optionally has a substituent and is optionally branched.

Further, R³ and R⁴ in the general formula (4) are independently a hydrocarbon group having 1 to 6 carbon atoms which optionally has a substituent and is optionally branched. Further, among the hydrocarbon groups having 1 to 6 carbon atoms which optionally have a substituent and are optionally branched, R³ and R⁴ are preferably a hydrocarbon group selected from the group consisting of -CH₂-, -CH₂-CH₂- and hydrocarbon groups represented by the formula (11): 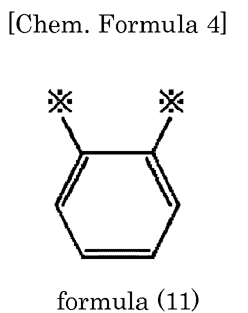 in which portions of a symbol * in the formula (11) represent a coupling position.]

In the non-aqueous electrolyte secondary battery in which the insulating layer is formed between the positive electrode and the negative electrode, the non-aqueous electrolyte can suppress the precipitation of metallic lithium on the surface of the negative electrode in charging a battery in a low temperature environment by containing the cyclic sulfate compound represented by the general formula (1) or the cyclic disulfonate compound represented by the general formula (4). A detail of a mechanism in which the precipitation of metallic lithium on the surface of the negative electrode is suppressed is not clear; however, it is estimated as follows.

In general, the insulating layer formed between the positive electrode and the negative electrode is porous not to obstruct flow of the electrolyte. Since the insulating layer is the porous layer, lithium ions come to be retained in the insulating layer. Since the insulating layer exists between the positive electrode and the negative electrode, the electrolyte is brought into a state in which many lithium ions exist in the vicinity of the surface of the negative electrode. Consequently, it is thought that the battery provided with the insulating layer formed between the positive electrode and the negative electrode easily causes the precipitation of metallic lithium on the surface of the negative electrode when a battery is charged with lithium-ion diffusibility lowered in a low temperature environment since a large amount of lithium ions exist in the vicinity of the negative electrode surface in comparison with a battery not provided with the insulating layer.

When the cyclic sulfate compound represented by the general formula (1) or the cyclic disulfonate compound represented by the general formula (4) is contained in the non-aqueous electrolyte, it is thought that a coating with low resistance is formed at an interface between the negative electrode and the non-aqueous electrolyte in the early stage of the use of a battery (use immediately after battery manufacturing) in comparison with the case in which a compound such as unsaturated sultone is contained in the non-aqueous electrolyte. Since the cyclic sulfate compound represented by the general formula (1) or the cyclic disulfonate compound represented by the general formula (4) has an SO₄ group, or two or more SO₃ groups in its structure, it is thought that the cyclic sulfate compound or the cyclic disulfonate compound can form the coating with low resistance at the interface between the negative electrode and the non-aqueous electrolyte. It is thought that since the resistance of the coating is low, lithium ions are smoothly inserted between layers of the negative active material even in a low temperature environment where the diffusibility of lithium ions is lowered to suppress the precipitation of metallic lithium on the surface of the negative electrode.

That is, the battery of the present embodiment maintains high safety by forming the insulating layer between the positive electrode and the negative electrode, and further can suppress the precipitation of metallic lithium on the surface of the negative electrode in charging a battery in a low temperature environment by the fact that the non-aqueous electrolyte contains the cyclic sulfate compound represented by the general formula (1) or the cyclic disulfonate compound represented by the general formula (4).

Further, the cyclic sulfate compound represented by the general formula (1) is preferably a compound represented by the formula (5), a compound represented by the formula (6) or a compound represented by the formula (7), and the cyclic disulfonate compound represented by the general formula (4) is preferably a compound represented by the formula (8), a compound represented by the formula (9) or a compound represented by the formula (10):

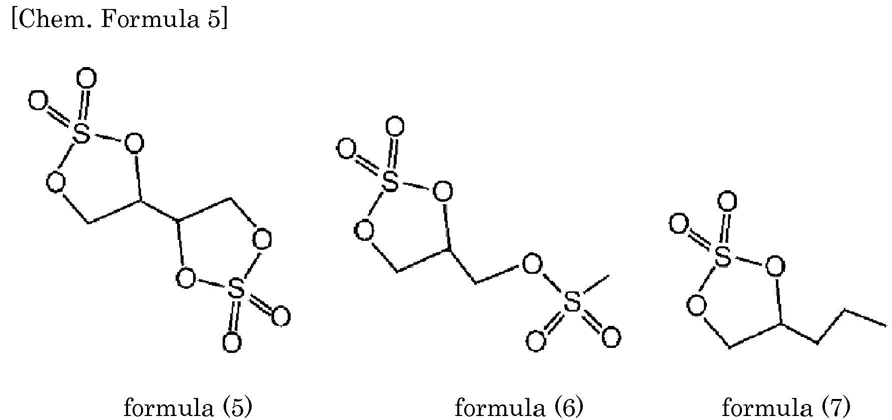

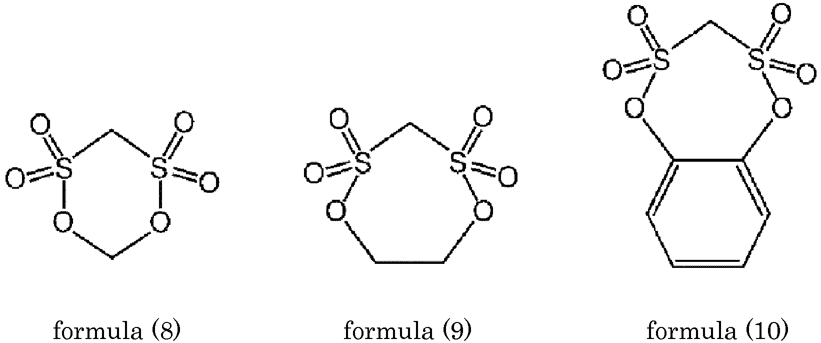

When the compounds represented by the formulas (5) to (10) are compared, the compound represented by the formula (5) or (6) is hardly decomposed in the non-aqueous electrolyte, and the compound represented by the formula (7) is easily decomposed in the non-aqueous electrolyte. If a compound contained in the non-aqueous electrolyte is hardly decomposed in the non-aqueous electrolyte, even a battery prepared by using the non-aqueous electrolyte which has been left standing for a certain period of time after incorporation of the compound is not largely deteriorated in its characteristics in comparison to a battery prepared by using a fresh non-aqueous electrolyte immediately after incorporation of the compound. Accordingly, after incorporation of the compound, the non-aqueous electrolyte can be stored for a certain period of time, and therefore it is preferred since the productivity of a batter is improved.

Hence it is preferred to use the compound represented by the formula (5), (6), (8), (9) or (10) among the compounds represented by the formulas (5) to (10), and it is more preferred to use the compound represented by the formula (5) or (6).

Further, the insulating layer is brought into direct contact with the surface of the negative electrode, not via the separator, by forming the insulating layer between the separator and the negative electrode. Since the non-aqueous electrolyte is retained in the insulating layer, many of lithium ions in the non-aqueous electrolyte are present in the insulating layer. That is, it is thought that the configuration provided with the insulating layer formed between the separator and the negative electrode easily causes the precipitation of metallic lithium on the surface of the negative electrode since a larger amount of lithium ions exist in the vicinity of the negative electrode surface in comparison with a configuration provided with the insulating layer formed between the separator and the positive electrode. Accordingly, the battery provided with the insulating layer formed between the separator and the negative electrode is preferred since the battery has a great benefit of the usability of the present invention that the precipitation of metallic lithium on the surface of the negative electrode is suppressed by containing the cyclic sulfate compound represented by the general formula (1) or the cyclic disulfonate compound represented by the general formula (4) in the non-aqueous electrolyte, in comparison with a configuration provided with the insulating layer formed between the separator and the positive electrode.

The content of the cyclic sulfate compound represented by the general formula (1) or the cyclic disulfonate compound represented by the general formula (4) in the non-aqueous electrolyte of the present invention is preferably 4.0% by mass or less, more preferably 3.0% by mass or less, and moreover preferably 0.01% by mass or more and 2.0% by mass or less with respect to the total mass of the non-aqueous electrolyte.

The content of the cyclic sulfate compound represented by the general formula (1) or the cyclic disulfonate compound represented by the general formula (4) is not particularly limited. When the content of the cyclic sulfate compound represented by the general formula (1) or the cyclic disulfonate compound represented by the general formula (4) is 4.0% by mass or less with respect to the total mass of the non-aqueous electrolyte, it is thought that it becomes possible to well mix the compound represented by the general formula (1) or the compound represented by the general formula (4) and the non-aqueous solvent with each other. When the content of the cyclic sulfate compound represented by the general formula (1) or the cyclic disulfonate compound represented by the general formula (4) is 2.0% by mass or less with respect to the total mass of the non-aqueous electrolyte, it is thought that at the interface between the negative electrode and the non-aqueous electrolyte, the cyclic sulfate compound represented by the general formula (1) or the cyclic disulfonate compound represented by the general formula (4) can react moderately to form a coating having a suitable thickness. When the content of the cyclic sulfate compound represented by the general formula (1) or the cyclic disulfonate compound represented by the general formula (4) is 0.05% by mass or more with respect to the total mass of the non-aqueous electrolyte, it is thought that the coating at the interface between the negative electrode and the non-aqueous electrolyte can be robust. It is confirmed that, since the cyclic sulfate compound represented by the general formula (1) or the cyclic disulfonate compound represented by the general formula (4) is consumed due to the formation of the coating at the interface between the negative electrode and the non-aqueous electrolyte, the content of the cyclic sulfate compound represented by the general formula (1) or the cyclic disulfonate compound represented by the general formula (4) in the non-aqueous electrolyte in a post-charge-discharge battery is significantly decreased.

The non-aqueous electrolyte secondary battery of the present invention preferably contains lithium difluorophosphate since it can more suppress the precipitation of metallic lithium on the surface of the negative electrode in charging a battery in a low temperature environment.

It is thought that lithium difluorophosphate forms a coating at an interface between the positive electrode and the non-aqueous electrolyte in the early stage of the use of a battery (use immediately after battery manufacturing). It is thought that by virtue of this coating, oxidation decomposition on the positive electrode of the cyclic sulfate compound represented by the general formula (1) or the cyclic disulfonate compound represented by the general formula (4), is suppressed, and therefore the amount that would otherwise be consumed on the positive electrode of the cyclic sulfate compound represented by the general formula (1) or the cyclic disulfonate compound represented by the general formula (4) comes to be able to contribute to the formation of a coating at the interface between the negative electrode and the non-aqueous electrolyte.

The content of the lithium difluorophosphate is not particularly limited; however, the content is preferably 0.05% by mass or more and 2.0% by mass or less, and more preferably 0. 5% by mass or more and 1.5% by mass or less with respect to the total mass of the non-aqueous electrolyte. Thereby, the precipitation of metallic lithium on the surface of the negative electrode is remarkably suppressed. Herein, lithium difluorophosphate in the present invention encompasses not only a state in which a lithium ion is coupled with an anion, but also a state in which a lithium ion is dissociated from an anion.

The insulating layer in the present invention is an insulating porous layer, and examples thereof include a porous layer containing an inorganic oxide, a porous layer containing resin beads and a porous layer containing a heat-resistant resin such as an aramid resin. The insulating layer in the present invention is preferably a porous layer containing the inorganic oxide. The porous layer containing the inorganic oxide may contain a binder or a thickener as required.

As the inorganic oxide, a publicly known compound can be used; however, an inorganic oxide which is excellent in chemical stability during use of a battery is preferred. Examples of such an inorganic oxide include alumina, titania, zirconia, magnesia, silica, boehmite and the like. Further, as the inorganic oxide, a powdered inorganic oxide is preferably used, and a particle size of the powder is preferably 0.01 to 10 µm, particularly 0.05 to 2 µm. Further, the inorganic oxide may be used singly or in combination of two or more thereof.

The binder is not particularly limited, and for example, resin materials such as fluorine-contained resins, acrylic resins, rubber particles, polyethersulfone and polyvinylpyrrolidone can be used. Examples of the fluorine-contained resins include polyvinylidene fluoride (PVdF), polytetrafluoroethylene (PTFE) and the like. Examples of the rubber particles include styrene-butadiene rubber particles, modified acetonitrile rubber particles and the like. The binders may be used singly or in combination of two or more thereof.

The thickener is not particularly limited, and examples thereof include carboxymethyl cellulose (CMC), polyethylene oxide (PEO), modified acrylonitrile rubber and the like.

The insulating layer can be formed, for example, by applying an insulating layer paste onto the surface of a composite layer having an active material of the electrode plate contained therein and drying the paste, or by applying an insulating layer paste onto one surface or both surfaces in a thickness direction of the separator and drying the paste.

When the inorganic oxide is used in combination with the binder, the content of the binder is not particularly limited; however, it is preferably 1 to 20% by mass, and more preferably 2 to 10% by mass with respect to the total amount of the inorganic oxide and the binder. When the content of the binder is set to 1 to 20% by mass, mechanical strength and lithium ion conductivity of the insulating layer can be pursued simultaneously in a balanced manner.

The thickness of the insulating layer is not particularly limited, and it is preferably 2 to 20 µm, and more preferably 4 to 15 µm. When the thickness of the insulating layer is 2 µm or more, an insulating layer having high mechanical strength is obtained. When the thickness of the insulating layer is 20 µm or less, a distance between the positive electrode and the negative electrode arranged on respective sides of the insulating layer is not too large, and therefore power characteristics can be maintained.

For the non-aqueous electrolyte of the present invention, a non-aqueous electrolyte solution obtained by dissolving an electrolyte salt in a non-aqueous solvent can be employed. Examples of the electrolyte salt include LiClO₄, LiPF₆, LiBF₄, LiAsF₆, LiCF₃CO₂, LiCF₃(CF₃)₃, LiCF₃(C₂F₅)₃, LiCF₃SO₃, LiCF₃CF₂SO₃, LiCF₃CF₂CF₂SO₃, LiN(SO₂CF₃)₂, LiN(SO₂CF₂CF₃)₂, LiN(COCF₃)₂, LiN(COCF₂CF₃)₂, LiPF₃(CF₂CF₃)₃ and the like, and these electrolyte salts may be used singly, or may be used as a mixture of two or more thereof. From the viewpoint of electrical conductivity, LiPF₆ is suitable as the electrolyte salt, and a mixture of electrolyte salts predominantly composed of LiPF₆ and containing another electrolyte salt such as LiBF₄ can also be used.

As the non-aqueous solvent, ethylene carbonate, propylene carbonate, butylene carbonate, trifluoropropylene carbonate, γ-butyrolactone, sulfolane, 1,2-dimethoxyethane, tetrahydrofuran, methyl acetate, ethyl acetate, methyl propionate, ethyl propionate, dimethylsulfoxide, dimethyl carbonate, diethyl carbonate, ethylmethyl carbonates, dipropyl carbonate, methylpropyl carbonate, dibutyl carbonate and the like can be used. These non-aqueous solvents are preferably mixed for use from the viewpoint of adjusting the electrical conductivity and viscosity of the non-aqueous electrolyte.

For the purpose of improving cycle life characteristics or the safety of a battery, in the non-aqueous electrolyte of the present invention, carbonates such as vinylene carbonate, methylvinylene carbonate, monofluoroethylene carbonate and difluoroethylene carbonate; vinyl esters such as vinyl acetate and vinyl propionate; aromatic compounds such as benzene and toluene; halogen-substituted alkane such as perfluorooctane; or silyl esters such as tris(trimethylsilyl) borate, tris(trimethylsilyl) phosphate and tetrakis (trimethylsilyl) titanate may be, singly or as a mixture of two or more thereof, mixed and contained.

The positive active material in the battery of the present invention is not particularly limited, and various positive active materials can be used. For example, it is possible to use composite compounds of lithium and a transition metal represented by the general formula LiₓM1ₚO_{2-δ} or LiₓM2_{q}O_{4-δ} (M1 and M2 are each at least one metal selected from among Co, Ni and Mn, 0.4 ≤ x ≤ 1.2, 0.8 ≤ p ≤ 1.2, 1.5 ≤ q ≤ 2.2, and 0 ≤ δ ≤ 0.5), or compounds obtained by including at least one element selected from among Al, Fe, Cr, Ti, Zn, P and B in the composite oxides.

Moreover, a compound having an olivine structure represented by the general formula LiₓM3ᵤPO₄ (M3 is a 3d transition metal, 0 ≤ x ≤ 2, 0.8 ≤ u ≤ 1.2) can be used as a positive active material. In order to secure electrical conductivity, the compound having an olivine structure represented by the general formula LiₓM3ᵤPO₄ may be coated with amorphous carbon.

The positive electrode plate can contain a conducting agent, a binder and the like in addition to the positive active material. As the conducting agent, acetylene black, carbon black, graphite and the like can be used. As the binder, polyvinylidene fluoride (PVdF), vinylidene fluoride-hexafluoropropylene copolymer, styrene-butadiene rubber, polyacrylonitrile and the like may be used singly or as a mixture of two or more thereof.

The negative active material in the battery of the present invention is not particularly limited, and carbon materials; compounds of alloy of lithium and Al, Si, Pb, Sn, Zn, Cd or the like; metallic lithium; metal oxides represented by the general formula M4O_{z} (M4 is at least one element selected from among W, Mo, Si, Cu and Sn, 0 ≤ z ≤ 2); and the like can be used. Among these materials, carbon materials are preferred, and as the carbon material, graphite, non-graphitizable carbon, easily graphitizable carbon or mixtures thereof can be used. The negative electrode plate may contain a binder such as polyvinylidene fluoride (PVdF), styrene-butadiene rubber and the like; and the like as with the positive electrode plate.

The present invention can be realized in the form of an energy storage apparatus including a plurality of the above-mentioned non-aqueous electrolyte secondary batteries. An embodiment of the energy storage apparatus is shown in Fig. 3. In Fig. 3, the energy storage apparatus 30 includes a plurality of energy storage units 20. Each energy storage unit 20 includes a plurality of non-aqueous electrolyte secondary batteries 1. The energy storage apparatus 30 can be mounted as a power supply for automobiles such as electric vehicles (EV), hybrid vehicles (HEV) and plug-in hybrid vehicles (PHEV). Fig. 4 is a conceptual diagram of an automobile 100 equipped with the energy storage apparatus 30. Here, the automobile 100 includes the energy storage apparatus 30 and an automobile main body 40 accommodating the energy storage apparatus 30.

The non-aqueous electrolyte secondary battery 1, the energy storage unit 20 or the energy storage apparatus 30 according to the embodiment preferably includes a charge-discharge control means. The charge-discharge control means may be provided for every non-aqueous electrolyte secondary battery 1, or may be provided for every energy storage unit 20 or for every energy storage apparatus 30. The charge-discharge control means includes a charge control means which controls a voltage between the terminals of the secondary battery not to exceed the specified upper limit charging voltage during charging.

### EXAMPLES

The non-aqueous electrolyte secondary battery shown in Fig. 1 and the negative electrode plate shown in Fig. 2 are produced as described below. 1. Preparation of non-aqueous electrolyte secondary battery of Example 1 (1) Production of Positive Electrode Plate

Using LiNi_{1/3}Mn_{1/3}Co_{1/3}O₂ as a positive active material, acetylene black as a conduction aid and polyvinylidene fluoride (PVdF) as a binder, a mixture composed of the positive active material, the conduction aid and the binder in proportions of 90% by mass : 5% by mass : 5% by mass was prepared, and an appropriate amount of N-methylpyrrolidone (MNP) was added to the mixture for adjusting the viscosity of the mixture to prepare a positive composite paste. The positive composite paste was applied onto both surfaces of aluminum foil having a thickness of 20 µm and the paste was dried to prepare a positive electrode plate. A site where the positive composite was not applied and the aluminum foil was exposed was provided on the positive electrode plate, and a positive lead was joined to the site of the exposed aluminum foil.

### (2) Production of Negative Electrode Plate and Formation of Insulating Layer

Using non-graphitizable carbon as a negative active material and polyvinylidene fluoride (PVdF) as a binder, a mixture composed of the negative active material and the binder in proportions of 90% by mass : 10% by mass was prepared, and an appropriate amount of N-methylpyrrolidone (NMP) was added to the mixture for adjusting the viscosity of the mixture to prepare a negative composite paste. The negative composite paste was applied onto both surfaces of copper foil having a thickness of 15 µm and the paste was dried to prepare a negative electrode plate. Then, using aluminum oxide (Al₂O₃) having a particle size of 0.5 µm as an inorganic oxide and polyvinylidene fluoride (PVdF) as a binder, a mixture composed of the inorganic oxide and the binder in proportions of 94% by mass : 6% by mass was prepared, and an appropriate amount of N-methylpyrrolidone (NMP) was added to the mixture for adjusting the viscosity of the mixture to prepare a paste. An insulating layer was formed by applying the paste onto the negative composite layer and drying the paste. In doing so, the paste was applied in such a way that an average thickness of the insulating layer is 5 µm. A site where the negative composite layer and the insulating layer were not formed and the copper foil was exposed was provided on the negative electrode plate, and a negative electrode plate lead was joined to the site of the exposed copper foil.

### (3) Preparation of Not-Yet-Injected Secondary Battery

A power generating element was prepared by winding the positive electrode plate and the negative electrode plate with a separator interposed therebetween. The power generating element was housed in a battery case through an opening of the battery case. After the positive electrode plate lead was joined to a battery lid and the negative electrode plate lead was joined to a negative terminal, the battery lid was fit in the opening of the battery case, and the battery case was bonded to the battery lid by laser welding to prepare a secondary battery in a not-yet-injected state in which the non-aqueous electrolyte is not injected into the battery case.

### (4) Preparation and Injection of Non-aqueous Electrolyte

In a mixed solvent composed of ethylene carbonate (EC), dimethyl carbonate (DMC) and ethylmethyl carbonate (EMC) in proportions of 3 : 2 : 5 (by volume), LiPF₆ was dissolved so as to be 1 mol/L in concentration, and the compound represented by the formula (5) was added to the resulting solution such that the content of the compound was 1.0% by mass with respect to the total mass of the non-aqueous electrolyte to prepare a non-aqueous electrolyte. The non-aqueous electrolyte was injected into the battery case from an injection hole provided at the side face of the battery case and the injection hole was plugged with a stopper to prepare a battery of Example 1.

### 2. Preparation of Batteries of Examples 2 to 4

Batteries of Examples 2 to 4 were prepared by the same method as in the battery of Example 1 except that the insulating layer was formed on the surface of a separator opposite to a negative electrode, on the surface of a positive electrode, and on the surface of a separator opposite to a positive electrode, respectively.

### 3. Preparation of Batteries of Examples 5 to 9

Batteries of Examples 5 to 9 were prepared by the same method as in the battery of Example 1 except that the content of the compound represented by the formula (5) was 0.02% by mass, 0.05% by mass, 1.5% by mass, 2.0% by mass, and 4.0% by mass, respectively, with respect to the total mass of the non-aqueous electrolyte.

### 4. Preparation of Batteries of Examples 10 to 14

A battery of Example 10 was prepared by the same method as in the battery of Example 1 except that the compound represented by the formula (6) was contained in an amount of 1.0% by mass with respect to the total mass of the non-aqueous electrolyte in place of the compound represented by the formula (5).

A battery of Example 11 was prepared by the same method as in the battery of Example 1 except that the compound represented by the formula (7) was contained in an amount of 1.0% by mass with respect to the total mass of the non-aqueous electrolyte in place of the compound represented by the formula (5).

A battery of Example 12 was prepared by the same method as in the battery of Example 1 except that the compound represented by the formula (8) was contained in an amount of 1.0% by mass with respect to the total mass of the non-aqueous electrolyte in place of the compound represented by the formula (5).

A battery of Example 13 was prepared by the same method as in the battery of Example 1 except that the compound represented by the formula (9) was contained in an amount of 1.0% by mass with respect to the total mass of the non-aqueous electrolyte in place of the compound represented by the formula (5).

A battery of Example 14 was prepared by the same method as in the battery of Example 1 except that the compound represented by the formula (10) was contained in an amount of 1.0% by mass with respect to the total mass of the non-aqueous electrolyte in place of the compound represented by the formula (5).

### 5. Preparation of Battery of Example 15

A battery of Example 15 was prepared by the same method as in the battery of Example 1 except that the compound represented by the formula (5) and lithium difluorophosphate were each contained in an amount of 1.0% by mass with respect to the total mass of the non-aqueous electrolyte in place of the compound represented by the formula (5).

### 6. Preparation of Batteries of Comparative Examples 1 to 2

A battery of Comparative Example 1 was prepared by the same method as in the battery of Example 1 except that vinylene carbonate was contained in an amount of 1.0% by mass with respect to the total mass of the non-aqueous electrolyte in place of the compound represented by the formula (5).

A battery of Comparative Example 2 was prepared by the same method as in the battery of Example 1 except that 1,3-propenesultone was contained in an amount of 1.0% by mass with respect to the total mass of the non-aqueous electrolyte in place of the compound represented by the formula (5).

### 7. Evaluation Test

### (1) Verification Test of Initial Discharge Capacity

Using batteries of Examples 1 to 15 and Comparative Examples 1 to 2, verification tests of initial discharge capacity were performed under the following charge-discharge conditions. Each battery was charged to 4.2 V at a constant current of 800 mA (1 CA) in an environment of 25°C, and further charged at a constant voltage of 4.2 V such that a total charging time was 3 hours including constant current charge and constant voltage charge. After the charge, the battery was allowed to discharge to an end-of-discharge voltage of 2.75 V at a constant current of 800 mA, and this discharge capacity was taken as "initial discharge capacity".

### (2) Test of Low Temperature Charge Characteristics

Charge characteristics in a low temperature environment of each battery after the verification test of an initial discharge capacity were measured. As a measurement condition, a series of operations in which a battery was charged to 4.2 V at a constant current of 800 mA in an environment of 0°C, and further charged at a constant voltage of 4.2 V such that a total charging time was 3 hours including constant current charge and constant voltage charge, and then battery was allowed to discharge to 2.75 V at a constant current of 800 mA maintaining an environment of 0°C, was taken as 1 cycle. Then, as the test of low temperature charge characteristics, 20 cycles of the charge-discharge were performed repeatedly at the above-mentioned conditions. In addition, a quiescent time of 10 minutes was provided after charge and discharge.

### (3) Method of Comparing Amount of Precipitation of Metallic Lithium on Surface of Negative Electrode in Each Battery

If the precipitation of metallic lithium occurs on the surface of the negative electrode during charging of a battery in a low temperature (0°C) environment, a discharge capacity in discharge after the charge becomes less than the initial discharge capacity. The reason for this is that since a reaction in which metallic lithium is precipitated is not reversible, a capacity corresponding to the amount of consumption due to the precipitation of metallic lithium is reflected in the decrease from the initial discharge capacity. This means that the larger the decline in the discharge capacity after the test of low temperature charge characteristics with respect to the initial discharge capacity is, the larger the amount of precipitated metallic lithium is. In the present invention, a degree of the precipitation of metallic lithium of each battery was evaluated by comparing the initial discharge capacity with the discharge capacity after the test of low temperature charge characteristics (charge-discharge conditions are identical to those of the verification test of an initial discharge capacity).

### (4) 60°C Cycle Life Test

A 60°C cycle life test of each battery after the verification test of an initial discharge capacity was performed under the following conditions.

As a measurement condition, a series of operations in which a battery was charged to 4.2 V at a constant current of 800 mA in an environment of 60°C, and further charged at a constant voltage of 4.2 V such that a total charging time was 3 hours including constant current charge and constant voltage charge, and then battery was allowed to discharge to 2.75 V at a constant current of 800 mA in an environment of 60°C, was taken as 1 cycle. Then, as the 60°C cycle life test, 300 cycles of the charge-discharge were performed repeatedly at the above-mentioned conditions. In addition, a quiescent time of 10 minutes was provided after charge and after discharge.

### (5) Measurement Method of Swelling of Each Battery before and after 60°C Cycle Test

Swelling of each battery before and after 60°C cycle life test was measured as follows.

The thickness of the battery before and after 60°C cycle life test was measured, and a change rate of the thickness was calculated from the following equation (1). As the battery thickness, the thickness at the center of the broadest face of the battery was measured.

Change rate of thickness of battery (%) = [(Thickness of battery after 60°C cycle life test)/(Thickness of battery before 60°C cycle life test)] × 100 ...(1)

### 8. Consideration

The results of comparison among amounts of precipitation of metallic lithium (comparison among declines in the discharge capacity after the test of low temperature charge characteristics with respect to the initial discharge capacity) in batteries of Examples 1 to 15 and Comparative Examples 1 to 2 are shown in Table 1.

It was found that the battery (Examples 1 to 15) in which the compound represented by the formula (5), the formula (6) or the formula (7) being the cyclic sulfate compound represented by the general formula (1), or the compound represented by the formula (8), the formula (9) or the formula (10) being the cyclic disulfonate compound represented by the general formula (4), is contained in the non-aqueous electrolyte, can suppress the precipitation of metallic lithium on the surface of the negative electrode in charging a battery in a low temperature environment, in comparison with the battery (Comparative Examples 1 to 2) in which 1,3-propenesultone being vinylene carbonate or unsaturated sultone, is contained in the non-aqueous electrolyte.

It is thought that since the cyclic sulfate compound represented by the general formula (1) or the cyclic disulfonate compound represented by the general formula (4) has an SO₄ group, or two or more SO₃ groups in its structure, the resistance of a coating at the interface between the negative electrode and the non-aqueous electrolyte, formed by the cyclic sulfate compound or the cyclic disulfonate compound, is low. It is thought that since the resistance of the coating formed at the interface between the negative electrode and the non-aqueous electrolyte is low, lithium ions are smoothly inserted between layers of the negative active material to suppress the precipitation of metallic lithium on the surface of the negative electrode even though the diffusibility of lithium ions is lowered in a low temperature environment.

The battery (Example 15) in which the cyclic sulfate compound represented by the formula (5) and lithium difluorophosphate were each contained in an amount of 1.0% by mass with respect to the total mass of the non-aqueous electrolyte, resulted in the maximum suppression of the precipitation of metallic lithium on the surface of the negative electrode. The reason for this is likely that since lithium difluorophosphate formed a coating at an interface between the positive electrode and the non-aqueous electrolyte, the cyclic sulfate compound hardly underwent oxidation decomposition to be consumed on the positive electrode, and the amount that would otherwise have been consumed of the cyclic sulfate compound was able to contribute to the formation of a coating at the interface between the negative electrode and the non-aqueous electrolyte.

**[Table 1]**

| | Location of Insulating Layer Formation | Compound | Content/% by mass | Decline in Discharge Capacity after Test of Low Temperature Charge Characteristics with Respect to Initial Discharge Capacity/mAh |
|---|---|---|---|---|
| Example 1 | Negative electrode surface | Formula (5) | 1.0 | 20 |
| Example 2 | Separator surface opposite to negative electrode | Formula (5) | 1.0 | 21 |
| Example 3 | Positive electrode surface | Formula (5) | 1.0 | 16 |
| Example 4 | Separator surface opposite to positive electrode | Formula (5) | 1.0 | 18 |
| Example 5 | Negative electrode surface | Formula (5) | 0.02 | 56 |
| Example 6 | Negative electrode surface | Formula (5) | 0.05 | 32 |
| Example 7 | Negative electrode surface | Formula (5) | 1.5 | 15 |
| Example 8 | Negative electrode surface | Formula (5) | 2.0 | 14 |
| Example 9 | Negative electrode surface | Formula (5) | 4.0 | 23 |
| Example 10 | Negative electrode surface | Formula (6) | 1.0 | 33 |
| Example 11 | Negative electrode surface | Formula (7) | 1.0 | 43 |
| Example 12 | Negative electrode surface | Formula (8) | 1.0 | 39 |
| Example 13 | Negative electrode surface | Formula (9) | 1.0 | 41 |
| Example 14 | Negative electrode surface | Formula (10) | 1.0 | 37 |
| Example 15 | Negative electrode surface | Formula (5) and lithium difluorophosphate | 1.0+1.0 | 8 |
| Comparative Example 1 | Negative electrode surface | Vinylene carbonate | 1.0 | 79 |
| Comparative Example 2 | Negative electrode surface | 1,3-propenesultone | 1.0 | 94 |

Further, change rates of the thickness of the battery before and after 60°C cycle life test in batteries of Example 1 and Examples 10 to 13 are shown in Table 2. It was found that the battery (Example 1, Example 10 and Examples 12 to 13) in which the compound represented by the formula (5) or the formula (6) being the cyclic sulfate compound represented by the general formula (1), or the compound represented by the formula (8) or the formula (9) being the cyclic disulfonate compound represented by the general formula (4), is contained in the non-aqueous electrolyte, suppresses swelling of the battery after 60°C cycle life test, in comparison with the battery (Example 11) in which the compound represented by the formula (7) being the cyclic sulfate compound represented by the general formula (1) is contained in the non-aqueous electrolyte. Although the reason for this is not clear, it is thought that since the cyclic sulfate compound represented by the formula (5) or the formula (6), or the cyclic disulfonate compound represented by the formula (8) or the formula (9) has two or more SO₄ groups or two or more SO₃ groups in its structure, a more robust coating is formed at the interface between the negative electrode and the non-aqueous electrolyte than the cyclic sulfate compound represented by the formula (7) having only one SO₄ group in its structure. Thereby, in the batteries of Examples 1, 10, 12 and 13, the decomposition reaction of the non-aqueous solvent on the negative electrode was suppressed and swelling of the battery was suppressed in comparison with the battery of Example 11.

**[Table 2]**

| | Location of Insulating Layer Formation | Compound | Content/% by mass | Change Rate of Thickness of Battery before and after 60°C Cycle Life Test |
|---|---|---|---|---|
| Example 1 | Negative electrode surface | Formula (5) | 1.0 | 12 |
| Example 10 | Negative electrode surface | Formula (6) | 1.0 | 24 |
| Example 11 | Negative electrode surface | Formula (7) | 1.0 | 58 |
| Example 12 | Negative electrode surface | Formula (8) | 1.0 | 22 |
| Example 13 | Negative electrode surface | Formula (9) | 1.0 | 25 |

### INDUSTRIAL APPLICABILITY

The non-aqueous electrolyte secondary battery according to the present invention suppress the precipitation of metallic lithium on the surface of the negative electrode in charging a battery in a low temperature environment, and therefore it is useful as a power supply for automobiles such as electric vehicles, hybrid vehicles and plug-in hybrid vehicles.

### DESCRIPTION OF REFERENCE SIGNS

- 1: Non-aqueous electrolyte secondary battery
- 2: Electrode group
- 3: Positive electrode plate (Positive electrode)
- 4: Negative electrode plate (Negative electrode)
- 4a: Negative current collector
- 4b: Negative active material composite layer
- 4c: Insulating layer
- 5: Separator
- 6: Battery case
- 7: Battery lid
- 8: Positive electrode terminal
- 9: Positive electrode plate lead
- 10: Negative electrode plate lead
- 20: Energy storage unit
- 30: Energy storage apparatus
- 40: Automobile main body
- 100: Automobile

## Claims

1. A non-aqueous electrolyte secondary battery comprising: a positive electrode, a negative electrode, a separator, a non-aqueous electrolyte, and an insulating layer disposed between the positive electrode and the negative electrode, wherein the non-aqueous electrolyte contains a cyclic sulfate compound represented by the following general formula (1) or a cyclic disulfonate compound represented by the following general formula (4): 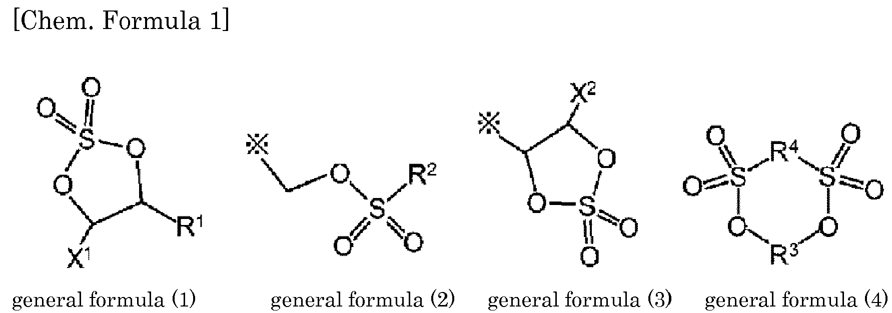 in which R¹ in the general formula (1) represents an alkyl group having 1 to 3 carbon atoms which is optionally substituted with a halogen element, or a group represented by the general formula (2) or the general formula (3); R² in the general formula (2) represents an alkyl group having 1 to 3 carbon atoms which is optionally substituted with a halogen element; portions of a symbol * in the general formula (2) and the general formula (3) represent a coupling position; X¹ and X² in the general formula (1) and the general formula (3) independently represent a hydrogen atom or a halogen element; and R³ and R⁴ in the general formula (4) independently represent a hydrocarbon group having 1 to 6 carbon atoms which optionally has a substituent and is optionally branched.

2. The non-aqueous electrolyte secondary battery according to claim 1, wherein the separator is arranged between the positive electrode and the negative electrode.

3. The non-aqueous electrolyte secondary battery according to claim 1 or 2, wherein the cyclic sulfate compound is a compound represented by the following formula (5), a compound represented by the following formula (6) or a compound represented by the following formula (7), and the cyclic disulfonate compound is a compound represented by the following formula (8), a compound represented by the following formula (9) or a compound represented by the following formula (10):

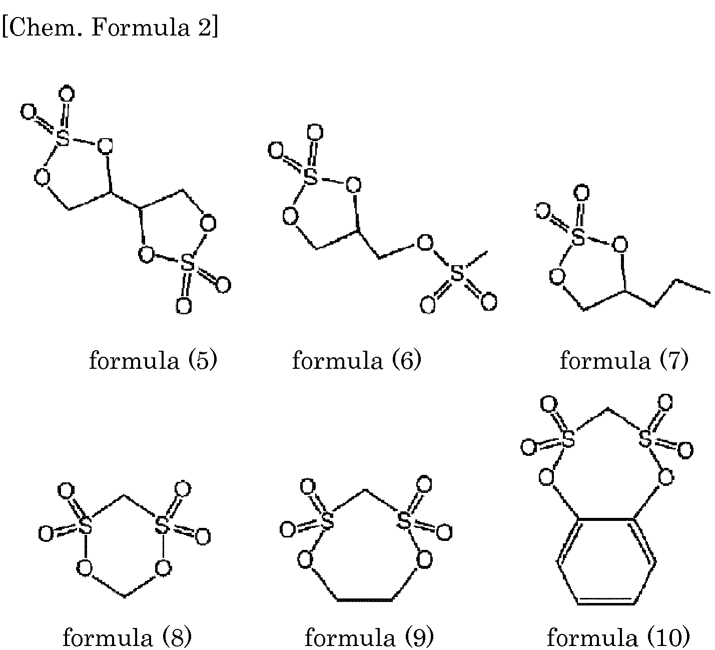

4. The non-aqueous electrolyte secondary battery according to any one of claims 1 to 3, wherein the cyclic sulfate compound is a compound represented by the general formula (5) or a compound represented by the general formula (6).

5. The non-aqueous electrolyte secondary battery according to any one of claims 1 to 4, wherein the content of the cyclic sulfate compound or the cyclic disulfonate compound is 4.0% by mass or less with respect to the total mass of the non-aqueous electrolyte.

6. The non-aqueous electrolyte secondary battery according to any one of claims 1 to 5, wherein the content of the cyclic sulfate compound or the cyclic disulfonate compound is 3.0% by mass or less with respect to the total mass of the non-aqueous electrolyte.

7. The non-aqueous electrolyte secondary battery according to any one of claims 1 to 6, wherein the content of the cyclic sulfate compound or the cyclic disulfonate compound is 2.0% by mass or less with respect to the total mass of the non-aqueous electrolyte.

8. The non-aqueous electrolyte secondary battery according to any one of claims 1 to 7, wherein the content of the cyclic sulfate compound or the cyclic disulfonate compound is 0.01% by mass or more with respect to the total mass of the non-aqueous electrolyte.

9. The non-aqueous electrolyte secondary battery according to any one of claims 1 to 8, wherein the non-aqueous electrolyte contains lithium difluorophosphate.

10. The non-aqueous electrolyte secondary battery according to any one of claims 1 to 9, wherein the content of the lithium difluorophosphate is 2.0% by mass or less with respect to the total mass of the non-aqueous electrolyte.

11. The non-aqueous electrolyte secondary battery according to any one of claims 1 to 10, wherein the content of the lithium difluorophosphate is 1.5% by mass or less with respect to the total mass of the non-aqueous electrolyte.

12. The non-aqueous electrolyte secondary battery according to any one of claims 1 to 11, wherein the content of the lithium difluorophosphate is 1.0% by mass or less with respect to the total mass of the non-aqueous electrolyte.

13. The non-aqueous electrolyte secondary battery according to any one of claims 1 to 12, wherein the content of the lithium difluorophosphate is 0.05% by mass or more with respect to the total mass of the non-aqueous electrolyte.

14. The non-aqueous electrolyte secondary battery according to any one of claims 1 to 13, wherein the insulating layer is a porous layer containing an inorganic oxide.

15. The non-aqueous electrolyte secondary battery according to any one of claims 1 to 14, wherein the insulating layer is formed on the surface of the negative electrode, or is formed in contact with the surface of the negative electrode.

16. The non-aqueous electrolyte secondary battery according to any one of claims 1 to 15, wherein the thickness of the insulating layer is 20 µm or less in a thickness direction of the separator.

17. A method for producing a non-aqueous electrolyte secondary battery which comprises a positive electrode, a negative electrode, a separator and a non-aqueous electrolyte and an insulating layer formed between the positive electrode and the negative electrode, wherein as the non-aqueous electrolyte, a non-aqueous electrolyte containing a cyclic sulfate compound represented by the general formula (1) or a cyclic disulfonate compound represented by the general formula (4) in an amount of 4.0% by mass or less with respect to the total mass of the non-aqueous electrolyte is used.
